# EUROPÄISCHE PATENTANMELDUNG

(11) **EP 3 273 083 A1**
(43) Veröffentlichungstag der Anmeldung: **24.01.2018**
(21) Anmeldenummer: 17188665.8
(22) Anmeldetag: 26.06.2013
(51) Int. Cl.: F16D 21/06, F16D 25/0638

(54) **LAMELLENTRÄGER-LAGERANORDNUNG UND KUPPLUNGSANORDNUNG FÜR EINEN KRAFTFAHRZEUGANTRIEBSSTRANG**

(30) Priorität: 12.07.2012 DE 102012013873
(62) Teilanmeldung aus: 13173714.0
(71) Anmelder: GETRAG B.V. & Co. KG, 74199 Untergruppenbach (DE)
(72) Erfinder: Gremplini, Hansi, 74379 Ingersheim (DE); Kramm, Torsten, 74360 Ilsfeld (DE)
(74) Vertreter: Witte, Weller & Partner Patentanwälte mbB

(57) **Zusammenfassung**

Lageranordnung (46) für wenigstens einen Lamellenträger (72, 78) einer Reibkupplungsanordnung (14), insbesondere für einen Kraftfahrzeugantriebsstrang, mit einem Nabenelement (48), das an einem Zapfen (50) drehbar lagerbar ist, das einen radial nach außen vorstehenden Radialsteg (66) aufweist und an dem ein Trägerelement (70) festgelegt ist, das mit dem Lamellenträger (72, 78) verbunden ist.

Dabei weist das Nabenelement (48) wenigstens einen Radialkanal (62) für ein Hydraulikfluid auf, der in einen radial außerhalb des Nabenelementes (48) angeordneten Bauraum mündet, wobei der Bauraum in axialer Richtung von dem Radialsteg (66) und /oder von dem Trägerelement (70) in einen ersten Raum (105) und einen zweiten Raum (107) unterteilt ist, und wobei in dem Radialsteg (66) wenigstens ein Axialkanal (110) ausgebildet ist, der den ersten und den zweiten Raum (105, 107) verbindet.

## Beschreibung

Die vorliegende Erfindung betrifft eine Lageranordnung für wenigstens einen Lamellenträger einer Reibkupplungsanordnung, insbesondere für einen Kraftfahrzeugantriebsstrang, mit einem Nabenelement, das an einem Zapfen drehbar lagerbar ist, das einen radial nach außen vorstehenden Radialsteg aufweist, und an dem ein Trägerelement festgelegt ist, das mit dem Lamellenträger verbunden ist.

Auf dem Gebiet der Kupplungsanordnungen für Kraftfahrzeugantriebsstränge wird generell zwischen trockenen Reibkupplungen und nass laufenden Reibkupplungen unterschieden. Letztere weisen in der Regel nass laufende Lamellenkupplungen auf, bei denen einige Lamellen eines Lamellenpaketes an einem Außenlamellenträger und andere Lamellen an einem Innenlamellenträger drehfest gelagert sind. Die Betätigung solcher Reibkupplungen folgt dadurch, dass das Lamellenpaket axial mittels einer geeigneten Aktuatoranordnung mit Druck beaufschlagt wird. Ferner sind Vorkehrungen dafür zu treffen, dass das Lamellenpaket mit Kühlfluid versorgt wird, um die insbesondere bei Schlupfbetrieb anfallenden Reibwärme abführen zu können.

Aus dem Dokument DE 10 2004 055 361 A1 ist eine Doppelkupplungsanordnung bekannt, bei der ein Nabenelement drehbar an einem gehäusefesten Zapfen gelagert ist. Die Doppelkupplungsanordnung weist zwei radial ineinander verschachtelte Reibkupplungen auf. Ein Außenlamellenträger der äußeren Reibkupplung ist direkt an dem Nabenelement festgelegt. Ferner ist, an einer axial beabstandeten Stelle, der Innenlamellenträger der inneren Reibkupplung ebenfalls an dem Nabenelement festgelegt. Das Nabenelement weist zwei Radialkanäle auf, die mit jeweiligen Zylinderräumen zum Betätigen der zwei Reibkupplungen verbunden sind. Ferner weist das Nabenelement zwei Radialkanäle auf, die jeweils mit einem Fliehkraftausgleichsraum verbunden sind. Der eine Fliehkraftausgleichsraum liegt dabei radial innerhalb der Reibkupplungen, so dass aus diesem Kühlfluid zur Kühlung der Reibkupplungen abgezweigt wird.

Ein ähnliches Konzept ist aus dem Dokument DE 10 2008 055 681 A1 bekannt. Hierbei ist jedoch das Nabenelement mit einem Trägerelement verbunden, an dem sowohl ein Außenlamellenträger der äußeren Reibkupplung als auch ein Innenlamellenträger der inneren Reibkupplung festgelegt sind. Die Fluidausgleichsräume sind über einen Radialkanal des Nabenelementes angeschlossen, der in radialer Richtung auf einer Anordnung aus zwei Kühlkanalblechen gerichtet ist, die radial innerhalb der Reibkupplungen eingesetzt sind. Diese bilden einen Radialdurchgang zum Versorgen der Reibkupplungen mit Kühlfluid.

Es ist ebenfalls bekannt, ein Nabenelement mit einem radial nach außen vorstehenden Radialsteg vorzusehen, an dem wiederum Trägerelemente festgelegt sind, von denen eines mit Lamellenträgern einer Doppelkupplungsanordnung verbunden ist. Bei dieser bekannten Doppelkupplungsanordnung bilden die zwei Trägerelemente zwischen sich einen Radialdurchgang. Die Fluidausgleichsräume sind auf gegenüberliegenden Seiten dieser Trägerelementanordnung angeordnet und über jeweils einen eigenen Radialkanal des Nabenelementes an eine Drehdurchführung angeschlossen. Der Radialsteg weist an seinem Außenumfang eine Mehrzahl von Radialausnehmungen auf, durch die hindurch Fluid von den Ausgleichsräumen in den Radialdurchgang zwischen den Trägerelementen strömen kann.

Generell ist der Lösungsansatz mit einem derartigen Radialsteg an dem Nabenelement gegenüber den weiter oben beschriebenen Lösungen zu bevorzugen. Nachteilig ist jedoch, dass bei dieser Ausgestaltung die Verbindung zwischen den Trägerelementen und dem Radialsteg über den Umfang gesehen aufgrund der Radialausnehmungen nur absatzweise erfolgen kann. Dies führt zu einer vergleichsweise schwachen Schweißverbindung. Auch die Verbindungen zwischen einem der Trägerelemente und den Lamellenträgern ist dabei in einem Verzahnungsbereich der Lamellenträger vorgesehen, so dass auch hier nur eine über den Umfang abschnittsweise Verbindung realisierbar ist.

Zudem ist eine sehr hohe Anzahl von Verbindungen erforderlich.

Demgegenüber ist es eine Aufgabe der Erfindung, eine Lageranordnung der eingangs genannten Art anzugeben, mit der eine hohe Festigkeit der Verbindung zwischen Radialsteg und Trägerelement realisierbar ist.

Diese Aufgabe wird bei der eingangs genannten Lageranordnung dadurch gelöst, dass das Trägerelement an dem Radialsteg über eine um wenigstens 300°, insbesondere um 360° umlaufende stoffschlüssige Verbindung festgelegt ist.

Hierdurch kann eine hohe Festigkeit der Verbindung zwischen Trägerelement und Radialsteg eingerichtet werden.

Dabei ist besonders bevorzugt, wenn die stoffschlüssige Verbindung in radialer Richtung von dem Außenumfang des Nabenelements beabstandet ist, und zwar um einen Wert von wenigstens 5 mm, insbesondere von wenigstens 10 mm. Hierdurch ist es möglich, in dem Radialsteg selbst wenigstens einen Axialkanal auszubilden, der gegenüberliegende Fluidräume (z.B. Fluidausgleichsräume) miteinander verbindet.

Durch den vergleichsweise großen Radius der Verbindung kann die stoffschlüssige Verbindung zudem vergleichsweise lang ausgeführt werden, so dass eine besonders hohe Festigkeit realisierbar ist.

Die Reibkupplungsanordnung ist insbesondere eine Doppelkupplungsanordnung, könnte jedoch auch eine einfache Reibkupplungsanordnung sein. Im Falle einer Doppelkupplungsanordnung können die Reibkupplungen axial benachbart zueinander angeordnet sein. Bevorzugt sind diese jedoch radial verschachtelt angeordnet.

Die Betätigung der Reibkupplungen erfolgt vorzugweise hydraulisch, wobei an dem Nabenelement geeignete Kolben gelagert sind, die über jeweilige Kolben-Radialkanäle in dem Nabenelement mit Fluid versorgt werden.

Der Radialsteg kann über eine Verbindung (z.B. stoffschlüssige Verbindung) mit dem Nabenelement verbunden sein. Besonders bevorzugt ist es jedoch, wenn der Radialsteg einstückig mit dem Nabenelement ausgebildet ist. Das Nabenelement kann ein gehäusefestes Element sein, wobei der Zapfen in diesem Fall eine radial innerhalb des Nabenelementes gelagerte Welle sein kann. Besonders bevorzugt ist es jedoch, wenn der Zapfen ein gehäusefestes Element ist und das Nabenelement drehbar an dem Zapfen gelagert ist. In diesem Fall ist es bevorzugt, wenn zwischen dem Nabenelement und dem Zapfen eine Drehdurchführung eingerichtet ist, um Fluid über den Zapfen und geeignete Radialkanäle zum Außenumfang des Nabenelementes zu leiten.

In diesem Fall ist es bevorzugt, wenn der oder die Kolben zur Betätigung der Reibkupplungen axial verschieblich an dem Nabenelement gelagert sind und sich folglich mit dem Nabenelement mitdrehen. Das Nabenelement ist vorzugsweise mit einem Eingang der Reibkupplungsanordnung verbunden, insbesondere über einen Außenlamellenträger der radial äußeren Kupplung.

Bei einer Doppelkupplungsanordnung sind die zwei Kolben zum Betätigen der Reibkupplungen vorzugsweise auf axial gegenüberliegenden Seiten des Radialsteges angeordnet. Dabei ist es ebenfalls bevorzugt, wenn die Betätigungsrichtungen der zwei Kolben entgegengesetzt zueinander sind. Ferner ist es insgesamt vorteilhaft, wenn sowohl der Außenlamellenträger der äußeren Reibkupplung als auch der Innenlamellenträger der radial inneren Reibkupplung über den Radialsteg gelagert sind.

Das Trägerelement kann selbst ein Lamellenträger sein (beispielsweise der Außenlamellenträger der radial äußeren Reibkupplung), ist jedoch vorzugsweise ein separates Bauteil, an dem sowohl ein Außenlamellenträger der radial äußeren Kupplung als auch ein Innenlamellenträger der radial inneren Kupplung festgelegt sind.

Die Verbindungen, von denen vorliegend die Rede ist, sind vorzugsweise stoffschlüssige Verbindungen, insbesondere Schweißverbindungen. Als Schweißverfahren wird insbesondere ein Laserschweißverfahren eingesetzt.

Die Aufgabe wird somit vollkommen gelöst.

Von besonderem Vorzug ist es, wenn das Trägerelement mit dem Lamellenträger über eine um wenigstens 300°, insbesondere um 360° umlaufende stoffschlüssige Verbindung festgelegt ist.

Bei dieser Ausführungsform kann auch diese Verbindung mit hoher Festigkeit ausgeführt werden.

Gemäß einer weiteren bevorzugten Ausführungsform weist der Lamellenträger (insbesondere der Innenlamellenträger der inneren Reibkupplung) an einem axialen Ende einen ersten umlaufenden Radialkranz auf, über den der Lamellenträger mit dem Trägerelement verbunden ist.

Der Radialkranz ist dabei vorzugsweise ein nicht gewellter Abschnitt des Lamellenträgers. Der Lamellenträger ist vorzugsweise aus einem Blech hergestellt, das über ein Rollierverfahren oder dergleichen generell in eine gewellte Form gebracht wird, die eine Axialverzahnung bildet, auf die die damit zu verbindenden Lamellen aufgeschoben werden können. Der Radialkranz ist vorzugsweise ein bei diesem Prozess nicht rollierter bzw. mit einer Verzahnung versehener Abschnitt, so dass es möglich ist, an diesem eine um 360° umlaufende stoffschlüssige Verbindung mit dem Trägerelement einzurichten.

Das Trägerelement ist dabei vorzugsweise so angeordnet, dass ein Abschnitt des Trägerelements axial benachbart zu dem Radialkranz angeordnet ist. Die stoffschlüssige Verbindung zwischen dem Trägerelement und dem Lamellenträger kann dabei über eine Schweißverbindung erfolgen, die entweder in einem Spalt zwischen dem Radialkranz und dem Trägerelement ausgebildet wird. Besonders bevorzugt ist es jedoch, wenn die stoffschlüssige Verbindung axial durch das Trägerelement hindurchgeht.

Gemäß einer weiteren bevorzugten Ausführungsform, die in Verbindung mit dem Oberbegriff des Anspruchs 1 eine eigene Erfindung gemäß einem weiteren Aspekt darstellt, weist das Nabenelement wenigstens einen Radialkanal für ein Hydraulikfluid auf, der in einen radial außerhalb des Nabenelementes angeordneten Bauraum mündet, wobei der Bauraum in axialer Richtung von dem Radialsteg und/oder von dem Trägerelement in einen ersten Raum und einen zweiten Raum unterteilt ist, und wobei in dem Radialsteg wenigstens ein Axialkanal ausgebildet ist, der den ersten und den zweiten Raum verbindet.

Dieser weitere Aspekt der vorliegenden Erfindung lässt sich mit dem oben beschriebenen ersten Aspekt in beliebiger Weise kombinieren. Ferner werden nachstehend weitere Aspekte der Erfindung beschrieben, die sich in beliebiger Kombination ebenfalls miteinander kombinieren lassen.

Durch das Ausbilden eines Axialkanals in dem Radialsteg können die zwei Räume miteinander verbunden werden, bei denen es sich vorzugsweise um Fluidausgleichsräume handelt. Der Axialkanal ist vorzugsweise ein geschlossener Kanal, also insbesondere nicht durch Radialeinschnitte am Außenumfang des Radialsteges ausgebildet.

Der Axialkanal kann dabei unter einem Winkel kleiner 90° in Bezug auf eine Längsachse der Lageranordnung ausgerichtet sein. Soweit vorliegend von Axial-oder Radialkanälen die Rede ist, wird hierdurch im Wesentlichen die Richtung einer Fluidströmung durch diesen Kanal vorgegeben. Die Begriffe sollen nicht bedeuten, dass die Kanäle exakt parallel zu einer Längsachse oder senkrecht zu einer Längsachse der Lageranordnung ausgerichtet sind. Vielmehr ist es in vielen Fällen bevorzugt, diese Kanäle schräg auszurichten.

So ist es insbesondere bevorzugt, wenn der Axialkanal unter einem Winkel größer 20° und kleiner 80° in Bezug auf die Längsachse der Lageranordnung ausgerichtet ist. Ferner ist es bevorzugt, wenn der Radialkanal in dem Nabenelement sich in axialer Richtung über einen Abschnitt kleiner als die Hälfte der Dicke des Radialsteges mit dem Axialkanal überschneidet. Der Axialkanal erstreckt sich dabei vorzugsweise von diesem Bereich der Überschneidung schräg nach oben hin zu dem benachbarten Raum.

Insgesamt ist es besonders bevorzugt, wenn der Axialkanal radial beabstandet von der Verbindung zwischen Radialsteg und Trägerelement angeordnet ist.

Durch diese Maßnahme kann die Verbindung zwischen Radialsteg und Trägerelement radial außerhalb des Axialkanals angeordnet werden und damit auf einem vergleichsweise großen Durchmesser, so dass eine hohe Festigkeit der Verbindung realisierbar ist.

In einer Variante ist es auch denkbar, einen solchen Axialkanal nicht in dem Radialsteg sondern in dem Trägerelement auszubilden. In diesem Fall könnte das Trägerelement den Radialsteg bilden und mit einem Außenumfang des Nabenelementes verbunden sein.

Eine einstückige Ausbildung des Radialsteges mit dem Nabenelement ist jedoch bevorzugt, da auf diese Weise der Axialkanal gemeinsam mit dem Radialkanal (ggf. weiteren Radialkanälen für die Zylinderräume) auf einfache Weise gefertigt werden kann.

Gemäß einer weiteren Ausführungsform der vorliegenden Erfindung, die in Verbindung mit dem Oberbegriff des Anspruchs 1 eine eigene Erfindung gemäß einem weiteren Aspekt darstellt, erstreckt sich der Radialsteg in radialer Richtung über eine Rückstellfederanordnung hinaus, die zur Rückstellung eines Kolbens ausgebildet ist, der in Bezug auf das Nabenelement axial verschieblich gelagert ist.

Durch diese Maßnahme kann erreicht werden, dass der Radialsteg weitere wichtige Funktionen, abgesehen von Lagerung des Lamellenträgers, ausüben kann. Zudem kann hierdurch der Radialsteg sich in radialer Richtung relativ weit gegenüber dem Außenumfang des Nabenelementes erstrecken, so dass der Umfang der Schweißverbindung mit dem Trägerelement besonders lang ausgebildet sein kann.

Von besonderem Vorzug ist es dabei, wenn sich die Rückstellfederanordnung direkt an dem Radialsteg in axialer Richtung abstützt.

Bei dieser Ausführungsform wird der Radialsteg auch dazu verwendet, um die Rückstellfederanordnung abzustützen und kann insofern dazu beitragen, dass die gesamte Komplexität der Reibkupplungsanordnung verringert wird.

Gemäß einer weiteren bevorzugten Ausführungsform, die in Verbindung mit dem Oberbegriff des Anspruchs 1 eine eigene Erfindung gemäß einem weiteren Aspekt darstellt, ist axial beabstandet zu dem Radialsteg ein Wandelement angeordnet, wobei zwischen dem Wandelement und dem Radialsteg ein Radialdurchgang für Hydraulikfluid ausgebildet ist, der auf eine radiale Innenseite des Lamellenträgers gerichtet ist.

Das Wandelement ist dabei vorzugsweise ein nicht tragendes Element, das also nicht zur Lagerung der Lamellenträger beiträgt. Das Wandelement dient insbesondere dazu, dass die Volumina der Räume (Fluidausgleichsräume) eine definierte Größe haben können und im Betrieb als erstes befüllt werden können, bis der darin sich aufbauende Druck das Hydraulikfluid in den Bereich zwischen Wandelement und Radialsteg drückt und folglich Kühlfluid den Lamellenkupplungen zugeführt werden kann.

Dabei ist es von besonderem Vorzug, wenn das Wandelement lose zwischen dem Radialsteg und einer weiteren Rückstellfederanordnung angeordnet ist, die zur Rückstellung eines weiteren Kolbens ausgebildet ist, der in Bezug auf das Nabenelement axial verschieblich gelagert ist.

Bei dieser Ausführungsform dient das Wandelement zur axialen Abstützung der weiteren Rückstellfederanordnung. Dabei ist das Wandelement jedoch nicht mit dem Radialsteg oder einem sonstigen Bauteil starr verbunden, sondern kann bei der Montage lose eingesetzt werden, so dass die Montage insgesamt vereinfacht werden kann.

Das Wandelement kann dabei über separate Abstandshalter oder über Abstandshalter von dem Radialsteg beabstandet sein, die einstückig mit dem Radialsteg verbunden sind.

Von besonderem Vorzug ist es jedoch, wenn das Wandelement wenigstens eine axiale Ausbuchtung aufweist, über die sich das Wandelement an dem Radialsteg abstützt, derart, dass zwischen Radialsteg und Wandelement der Radialdurchgang gebildet werden kann.

Vorzugsweise weist das Wandelement dabei eine Mehrzahl von über den Umfang verteilt angeordneten axialen Ausbuchtungen auf.

Ferner ist es insgesamt vorteilhaft, wenn das Wandelement mittels des Lamellenträgers zentriert ist.

Hierdurch kann die Lage des Wandelementes in radialer Richtung definiert festgelegt werden.

Von besonderem Vorzug ist es dabei, wenn ein Innenumfang des Wandelementes radial beabstandet ist von einem Außenumfang des Nabenelementes, derart, dass der erste Raum und der zweite Raum auf den axial gegenüberliegenden Seiten des Radialstegs fluidisch miteinander verbunden werden können.

Ferner ist es insgesamt vorteilhaft, wenn ein das Nabenelement durchsetzender Radialkanal eine Mündung aufweist, die auf einen Innenumfang des Wandelementes gerichtet ist. Die axiale Erstreckung des Radialkanals ist dabei vorzugsweise größer als die axiale Dicke des Wandelementes.

Hierbei ist es möglich, durch den Radialkanal strömendes Fluid zum einen in den Raum zu leiten, der benachbart ist zu dem Wandelement, und zum anderen, über einen Axialkanal in dem Radialsteg, in den Raum, der benachbart ist zu dem Radialsteg. Ferner kann die Mündung des Radialkanals in axialer Richtung mit dem Radialdurchgang zwischen Radialsteg und Wandelement ausgerichtet sein.

Gemäß einer weiteren bevorzugten Ausführungsform, die in Verbindung mit dem Oberbegriff des Anspruchs 1 eine eigene Erfindung gemäß einem weiteren Aspekt darstellt, sind der Lamellenträger und ein zweiter Lamellenträger direkt oder indirekt über das Trägerelement miteinander verbunden, wobei die Verbindung so gewählt ist, dass der erste und der zweite Lamellenträger bei einem Bruch der Verbindung voneinander getrennt werden.

Diese Maßnahme betrifft insbesondere die Funktionssicherheit einer mit einer solchen Lageranordnung realisierten Doppelkupplungsanordnung.

Bei Doppelkupplungsanordnungen ist aus Gründen der Funktionssicherheit dafür Sorge zu tragen, dass die zwei Kupplungen nicht versehentlich gleichzeitig geschlossen werden, was insbesondere dann problematisch sein kann, wenn in den beiden Teilgetrieben eines zugeordneten Doppelkupplungsgetriebes Gangstufen eingelegt sind. In diesem Fall kann es zu Verspannungen bzw. Blockaden und im schlimmsten Fall zu einem Verlust der Traktion zwischen Reifen und Fahrbahnoberfläche kommen.

Durch die erfindungsgemäße Maßnahme, die Verbindung so zu wählen, dass der erste und der zweite Lamellenträger bei einem Bruch der Verbindung voneinander getrennt werden, kann erreicht werden, dass die Lamellenträger und folglich die diesen Lamellenträgern zugeordneten Reibkupplungen quasi voneinander "entkoppelt" werden. Selbst wenn auf eine der Kupplungen noch eine Kraft ausgeübt wird, wird damit nicht automatisch auch eine Andruckkraft auf die andere Reibkupplung ausgeführt, was in jenem Fall vorkommen könnte, wenn die zwei Lamellenträger bei einem Bruch der Verbindung miteinander verbunden bleiben.

Dabei ist es von besonderem Vorzug, wenn das Trägerelement einen Radialabschnitt aufweist, der axial benachbart zu einem Radialkranz angeordnet ist, der an einem axialen Ende des ersten Lamellenträgers ausgebildet ist, wobei die Verbindung eine axial durch das Trägerelement hindurchgehende stoffschlüssige Verbindung aufweist.

Durch diese Maßnahme wird dieser erste Lamellenträger bei einem Bruch der Verbindung von dem Trägerelement entkoppelt, so dass dieser Lamellenträger auch von dem zweiten Lamellenträger entkoppelt wird, der an dem Trägerelement direkt oder indirekt festgelegt ist.

Im einfachsten Fall kann das Trägerelement auch der zweite Lamellenträger sein. In diesem Fall kann die Lageranordnung mittels nur zwei stoffschlüssigen Schweißverbindungen realisiert werden, nämlich zwischen dem zweiten Lamellenträger und dem Radialsteg sowie zwischen dem zweiten Lamellenträger und dem ersten Lamellenträger.

In alternativen Ausführungsformen ist das Trägerelement ein separates Bauelement, und der zweite Lamellenträger wird mittels einer weiteren Schweißverbindung mit dem Trägerelement verbunden. In diesem Fall kann die Lageranordnung mittels lediglich drei stoffschlüssigen Schweißverbindungen realisiert werden, die vorzugsweise sämtlich vollumfänglich ausgebildet werden können, und insofern eine hohe Festigkeit haben können.

Durch die Tatsache, dass die stoffschlüssigen Verbindungen als ununterbrochene Schweißverbindungen ausgeführt werden können, können zudem Kerbspannungen vermieden werden, wie sie im Bereich von Verbindungsunterbrechungen auftreten könnten. Ferner kann ein mehrfaches An- und Absetzen von Schweißelektroden bei unterbrochenen Nähten vermieden werden. Hierdurch kann die Fertigung weniger zeitaufwendig und die Fertigungsqualität positiv beeinflusst werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeugantriebsstranges mit einer Längsschnittansicht durch eine Ausführungsform einer Doppelkupplungsanordnung mit einer erfindungsgemäßen Lageanordnung gemäß einer ersten Ausführungsform;
- Fig. 2: eine axiale Draufsicht auf einen Lamellenträgerkorb der Lageranordnung der Fig. 1;
- Fig. 3: eine schematische Längsschnittansicht durch ein Nabenelement und eine weitere Ausführungsform eines Lamellenträgerkorbes;
- Fig. 4: eine schematische Längsschnittansicht durch ein Nabenelement und eine weitere Ausführungsform eines Lamellenträgerkorbes;
- Fig. 5: eine schematische Längsschnittansicht durch ein Nabenelement und eine weitere Ausführungsform eines Lamellenträgerkorbes;
- Fig. 6: eine schematische Längsschnittansicht durch ein Nabenelement und eine weitere Ausführungsform eines Lamellenträgerkorbes; und
- Fig. 7: eine schematische Längsschnittansicht durch ein Nabenelement und eine weitere Ausführungsform eines Lamellenträgerkorbes.

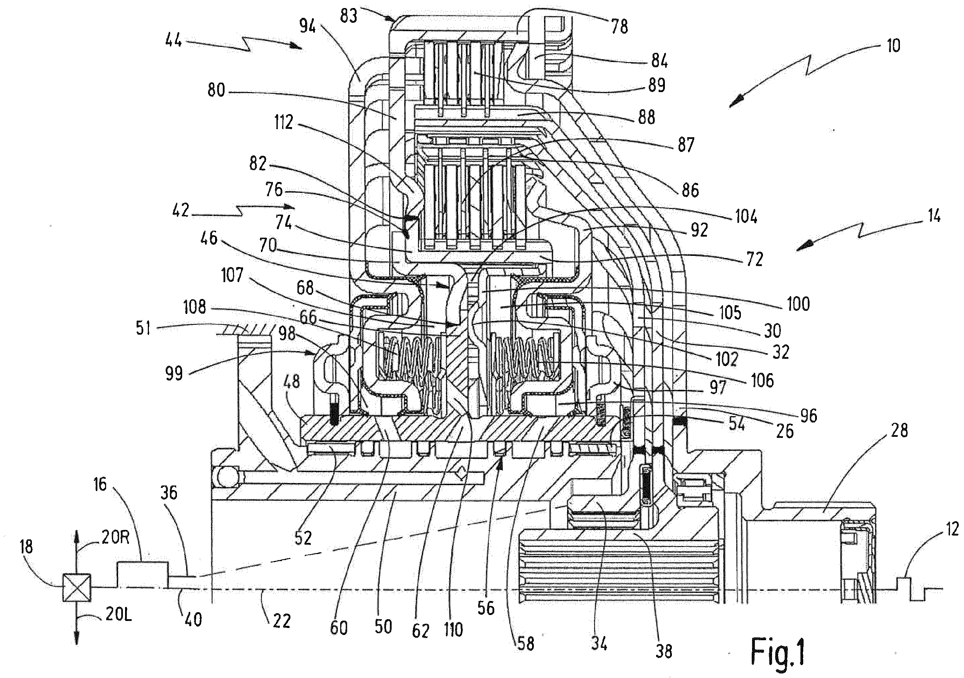

In Fig. 1 ist ein Antriebsstrang für ein Kraftfahrzeug schematisch dargestellt und generell mit 10 bezeichnet. Der Antriebsstrang 10 weist einen Antriebsmotor 12 wie einen Verbrennungsmotor auf. Ein Ausgang des Antriebsmotors 12 ist mit einem Eingang einer Doppelkupplungsanordnung 14 verbunden. Die Ausgänge der Doppelkupplungsanordnung 14 sind mit den Eingängen eines Doppelkupplungsgetriebes 16 verbunden. Ein Ausgang des Doppelkupplungsgetriebes 16 ist mit einem Differential 18 verbunden, mittels dessen Antriebsleistung auf zwei angetriebene Räder 20L, 20R verteilt wird. In Fig. 1 ist eine Längsachse der Doppelkupplungsanordnung 14 bei 22 gezeigt. Da die Doppelkupplungsanordnung 14 im Wesentlichen rotationssymmetrisch aufgebaut ist, ist in Fig. 1 lediglich die obere Hälfte dargestellt.

Die Doppelkupplungsanordnung 14 weist ein korbartiges Eingangsglied 26 auf, das mit einem Wellenabschnitt 28 verbunden ist, der mit einer Ausgangswelle (z.B. Kurbelwelle) des Antriebsmotors 12 verbunden ist. Ferner weist die Doppelkupplungsanordnung 14 ein erstes Ausgangsglied 30 und ein zweites Ausgangsglied 32 auf. Die Ausgangsglieder 30, 32 sind ebenfalls korbartig ausgebildet und im Wesentlichen axial versetzt zu dem Eingangsglied 26 angeordnet, wobei das zweite Ausgangsglied 32 zwischen dem Eingangsglied 26 und dem ersten Ausgangsglied 30 angeordnet ist. Das erste Ausgangsglied 30 ist mit einem ersten Wellenabschnitt 34 verbunden, der mit einer ersten Getriebeeingangswelle 36 des Doppelkupplungsgetriebes 16 verbunden ist. Das zweite Ausgangsglied 32 ist mit einem zweiten Wellenabschnitt 38 verbunden, der mit einer zweiten Getriebeeingangswelle 40 des Doppelkupplungsgetriebes 16 verbunden ist. Der zweite Wellenabschnitt 38 ist radial innerhalb des ersten Hohlwellenabschnittes 34 ausgebildet, kann jedoch ebenfalls als Hohlwellenabschnitt ausgebildet sein.

Die Doppelkupplungsanordnung 14 weist eine erste Reibkupplung 42 und eine zweite Reibkupplung 44 auf. Die Reibkupplungen 42, 44 sind jeweils als nasslaufende Lamellenkupplungen ausgebildet. Die Reibkupplungen 42, 44 sind radial ineinander verschachtelt, wobei die erste Reibkupplung 42 eine radial innen liegende Lamellenkupplung, und die zweite Reibkupplung 44 die radial außen angeordnete Lamellenkupplung ist.

Ein Außenlamellenträger der ersten Reibkupplung 42 ist mit dem ersten Ausgangsglied 30 verbunden. Ein Innenlamellenträger der zweiten Reibkupplung 44 ist mit dem zweiten Ausgangsglied 32 verbunden.

Die Doppelkupplungsanordnung 14 weist ferner eine Lageranordnung für einen Außenlamellenträger der zweiten Reibkupplung 44 und für einen Innenlamellenträger der ersten Reibkupplung 42 auf.

Die Lageranordnung 46 weist ein hohlwellenartiges Nabenelement 48 auf, das mittels eines ersten Lagers 52 und eines axial beabstandeten zweiten Lagers 54 an einem Zapfen 50 drehbar gelagert ist, der an einem schematisch angedeuteten Gehäuse 51 gehäusefest festgelegt ist.

Der Zapfen 50 ist ebenfalls als Hohlzapfen ausgebildet. Die Getriebeeingangswellen 36, 40 verlaufen durch den Zapfen 50 hindurch.

Zwischen dem Zapfen 50 und dem Nabenelement 48 ist eine Drehdurchführung 56 eingerichtet. Hierzu sind in dem Zapfen 50 nicht näher bezeichnete Kanäle zum Zuführen von Fluid (insbesondere ATF-Fluid) ausgebildet. Über die Gehäuseanbindung des Zapfens 50 sind diese Kanäle mit einer Hydraulikschaltung verbunden, die Hydraulikfluid mit geeignetem Druck bzw. geeignetem Volumenstrom bereitstellt, wie es im Stand der Technik an sich bekannt ist.

Das Nabenelement 48 weist einen ersten Radialkanal 58 auf, über den Hydraulikfluid zum Betätigen der ersten Kupplung 42 zugeführt werden kann. Ferner weist das Nabenelement 48 einen zweiten Radialkanal 60 auf, über den Hydraulikfluid zum Betätigen der zweiten Reibkupplung 44 zugeführt werden kann. Schließlich weist das Nabenelement 48 einen dritten Radialkanal 62 auf, der in axialer Richtung zwischen dem ersten und dem zweiten Radialkanal 58, 60 angeordnet ist. Über den dritten Radialkanal 62 wird Hydraulikfluid für Fluidausgleichsräume sowie zum Kühlen der Reibkupplungen 42, 44 zugeführt. In der Darstellung der Fig. 1 sind jeweils nur ein einzelner Radialkanal 58, 60, 62 dargestellt. Es versteht sich jedoch, dass über den Umfang verteilt eine Mehrzahl derartiger Radialkanäle vorgesehen sein können.

Das Nabenelement 48 weist einen Radialsteg 66 auf, der in axialer Richtung zwischen dem ersten und dem zweiten Radialkanal 58, 60 angeordnet ist und sich von dem Außenumfang des Nabenelementes 48 radial nach außen ringscheibenartig erstreckt. Der Radialsteg 66 ist vorzugsweise einstückig mit dem Nabenelement 48 ausgebildet. In axialer Richtung ist der Radialsteg 66 ferner überschneidend zu einer radial außen liegenden Mündung des dritten Radialkanals 62 angeordnet.

Der Radialsteg 66 weist an seinem Außenumfang einen Absatz auf, in den ein ringförmiges Trägerelement 70 eingesetzt ist. Das Trägerelement 70 ist mit dem Radialsteg 60 im Bereich dieses Absatzes über eine erste Schweißverbindung 68 stoffschlüssig verbunden. Das Trägerelement 70 weist einen ersten Radialabschnitt auf, der zwischen axialen Enden der ersten Reibkupplung 42 angeordnet ist, sowie einen Axialabschnitt, der etwa parallel zu einem Innenlamellenträger der ersten Reibkupplung 42 angeordnet ist, sowie einen zweiten Radialabschnitt, der axial benachbart zu dem Innenlamellenträger der ersten Reibkupplung 42 angeordnet ist. Der Innenlamellenträger der ersten Reibkupplung 42 wird vorliegend als erster Lamellenträger 72 bezeichnet. Der erste Lamellenträger 72 weist über den Umfang eine Axialverzahnung auf, auf die die diesem Lamellenträger zugeordneten Lamellen aufgeschoben werden können. Ferner weist der erste Lamellenträger 72 einen sich an einem axialen Ende radial nach außen erstreckenden Radialkranz 74 auf, der benachbart angeordnet ist zu dem zweiten Radialabschnitt des Trägerelementes 70. Der Radialkranz 74 ist dort mit dem Trägerelement 70 über eine zweite Schweißverbindung 76 verbunden.

Sowohl die erste Schweißverbindung 68 als auch die zweite Schweißverbindung 76 sind dabei über den Umfang umlaufende, unterbrechungsfreie Schweißverbindungen, die ohne Absetzen eines Schweißwerkzeuges (z.B. Laser) ausgebildet werden können.

Der Außenlamellenträger der zweiten Reibkupplung 42 wird vorliegend als zweiter Lamellenträger 78 bezeichnet. Dieser weist an seinem Umfangsabschnitt ebenfalls eine Verzahnung auf, in die diesem Lamellenträger zugeordnete Lamellen axial eingeschoben werden können.

Ferner weist der zweite Lamellenträger 78 einen Radialabschnitt 80 auf, der sich von dem Verzahnungsbereich radial nach innen erstreckt, und zwar auf der gleichen axialen Seite wie der zweite radiale Abschnitt des Trägerelementes 70. Das Trägerelement 70 ist mit dem radial innen liegenden Umfang des Radialabschnittes 80 des zweiten Lamellenträgers 78 über eine dritte Schweißverbindung 82 verbunden, die ebenfalls umlaufend ausgebildet ist.

Der erste Lamellenträger 72, der zweite Lamellenträger 78, das Trägerelement 70 sowie das Nabenelement 48 (genauer der Radialsteg des Nabenelementes) bilden einen Lamellenträgerkorb.

In an sich bekannter Weise ist der zweite Lamellenträger 78 auf der dem Radialabschnitt 80 gegenüberliegenden axialen Seite über einen Sicherungsring 84 drehfest mit dem Eingangsglied 26 verbunden.

Der Außenlamellenträger der ersten Reibkupplung 42 wird vorliegend als dritter Lamellenträger 86 bezeichnet. Zwischen dem ersten Lamellenträger 72 und dem dritten Lamellenträger 86 ist ein erstes Lamellenpaket 87 angeordnet.

Der Innenlamellenträger der zweiten Reibkupplung 44 wird vorliegend als vierter Lamellenträger 88 bezeichnet. Zwischen dem zweiten Lamellenträger 78 und dem vierten Lamellenträger 88 ist ein zweites Lamellenpaket 89 angeordnet.

Der Lamellenträgerkorb 83 ist über die starren Verbindungen zwischen Radialsteg 66, Trägerelement 70 und erstem sowie zweitem Lamellenträger 72, 78 insgesamt drehbar an dem Zapfen 50 gelagert.

Die Doppelkupplungsanordnung 14 weist einen ersten Kolben 92 und einen zweiten Kolben 94 auf, die jeweils axial verschieblich an dem Nabenelement 48 ausgebildet sind und sich generell mit dem Nabenelement 48 mit drehen.

Der erste Kolben 92 ist dabei in axialer Richtung zwischen dem ersten Ausgangsglied 30 und dem Radialsteg 66 angeordnet und dient dazu, das erste Lamellenpaket 87 axial zusammenzudrücken. Ein erster Kolben- bzw. Zylinderraum 96, der fluidisch mit dem ersten Radialkanal 58 verbunden ist, ist zwischen dem ersten Kolben 92 und einer ersten Axialabstützung 97 ausgebildet, die axial an dem Nabenelement 48 festgelegt ist.

In entsprechender Weise ist ein zweiter Kolben- bzw. Zylinderraum 98 in axialer Richtung zwischen dem zweiten Kolben 94 und einer zweiten Axialabstützung 99 ausgebildet, die axial an dem Nabenelement 48 festgelegt ist. Der zweite Kolben 94 ist dazu ausgelegt, das zweite Lamellenpaket 89 zusammenzudrücken, und zwar in der entgegengesetzten Richtung, in der der erste Kolben 92 das erste Lamellenpaket 87 zusammendrückt.

In axialer Richtung zwischen dem Radialsteg 66 und dem ersten Kolben 92 ist ein Wandelement 100 angeordnet. Das Wandelement 100 ist als Ringelement angeordnet, das sich außenumfänglich an dem Innenumfang des ersten Lamellenträgers 72 zentriert. Das Wandelement 100 übernimmt keine tragende Funktion, sondern wird lose in eine Position benachbart zu und axial beabstandet von dem Radialsteg 66 montiert. Dabei weist das Wandelement 100 eine Mehrzahl von über den Umfang verteilten axialen Ausbuchtungen 102 auf, über die sich das Wandelement 100 in axialer Richtung an dem Radialsteg 66 abstützt und hierdurch einen Radialdurchgang 104 zwischen dem Radialsteg 66 und dem Wandelement 100 einrichtet.

Der Radialdurchgang 104 ist in axialer Richtung mit der Mündung des dritten Radialkanals 62 ausgerichtet.

Das Wandelement 100 weist einen Innendurchmesser auf, der größer ist als der Außendurchmesser des Nabenelementes 48.

Zwischen dem Wandelement 100 und dem ersten Kolben 92 ist ein erster Ausgleichsraum 105 ausgebildet, in dem eine erste Rückstellfederanordnung 106 angeordnet ist. Die Rückstellfederanordnung 106 greift an einem Ende an dem ersten Kolben 92 und an dem anderen axialen Ende an dem Wandelement 100 an, derart, dass sich die Rückstellfederanordnung 106 an dem Wandelement 100 axial abstützen kann, um die Rückstellwirkung für den ersten Kolben 92 zu realisieren.

Auf der axial gegenüberliegenden Seite des Radialsteges 66 ist ein zweiter Ausgleichsraum 107 gebildet. Dieser ist zwischen dem Radialsteg 66 und dem zweiten Kolben 94 ausgebildet. In dem zweiten Ausgleichsraum 107 ist eine zweite Rückstellfederanordnung 108 angeordnet, die sich direkt an dem Radialsteg 66 abstützt.

Die erste Schweißverbindung 68 liegt in radialer Richtung außerhalb der Rückstellfederanordnungen 106, 108.

In dem Radialsteg 66 ist radial innerhalb der ersten Schweißverbindung 68 und benachbart zu dem dritten Radialkanal 62 ein Axialkanal 110 ausgebildet, der von dem ersten Ausgleichsraum 105 hin zu dem zweiten Ausgleichsraum 107 führt, und zwar schräg nach oben.

Es versteht sich, dass vorzugsweise eine Mehrzahl derartiger Axialkanäle 110 über den Umfang verteilt angeordnet sind.

Im Betrieb wird Fluid für die Ausgleichsräume 105, 107 sowie zum Kühlen der Kupplungen über den dritten Radialkanal 62 zugeführt. Da dessen Mündung im Bereich des Radialsteges 66 und des Wandelementes 100 liegt, wird das über den dritten Radialkanal 62 einströmende Fluid in den ersten Ausgleichsraum 105 und in den zweiten Ausgleichsraum 107 geführt (in den zweiten Ausgleichsraum 107 über den Axialkanal 110). Wenn diese Ausgleichsräume gefüllt sind, kann ferner Fluid über den Radialdurchgang 104 auf den Innenumfang des ersten Lamellenträgers 72 geleitet werden. Dieser, wie auch der dritte und der vierte Lamellenträger weisen umfänglich Durchtrittsöffnungen auf, so dass das radial nach außen gedrückte Fluid zwischen den Lamellen vorbeiströmt und in den Lamellenpaketen anfallende Wärme effizient abtransportieren kann.

Die Ausgleichsräume 105, 107 sind dabei dazu vorgesehen, ein Betätigen der Kolben aufgrund von Fluid in den Kolbenräumen 96 und/oder 98 zu verhindern, das aufgrund der Drehzahlen radial nach außen gedrückt wird und folglich eine Axialkraft auf den jeweiligen Kolben ausübt.

Zur Abdichtung der Ausgleichsräume ist vorzugsweise eine Dichtung zwischen dem ersten Kolben 92 und dem Wandelement 100 vorgesehen. Ferner ist in entsprechender Weise eine Abdichtung zwischen dem Trägerelement 70 und dem zweiten Kolben 94 vorgesehen.

Der Lamellenträgerkorb 83 kann mit nur drei Schweißverbindungen 68, 76, 82 realisiert werden, wobei aufgrund der relativ großen Durchmesser dieser Schweißverbindungen eine hohe Festigkeit erzielt wird und wobei diese Schweißverbindungen jeweils umlaufend ausgebildet werden können.

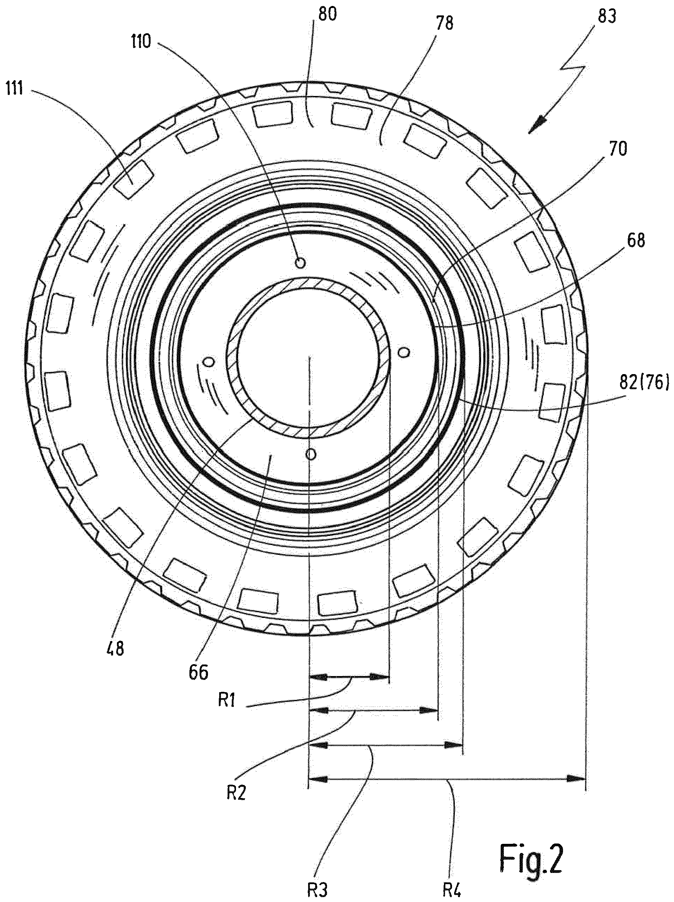

Dies ist in Fig. 2 dargestellt, in der der Lamellenträgerkorb 83 der Fig. 1 in einer axialen Draufsicht (von der Seite der zweiten Axialabstützung 99 aus gesehen) dargestellt ist.

Man erkennt, dass der Radius R2 der ersten Schweißverbindung 68 vorzugsweise größer ist als das 1,1-fache, insbesondere größer als das 1,2-fache des Radius R1 des Außenumfangs des Nabenelementes 48. Der Radius R3 der dritten Schweißverbindung 82 (und in ähnlicher Weise der zweiten Schweißverbindung 76) ist größer als der Radius R2.

Der Außenradius des zweiten Lamellenträgers 78 ist bei R4 gezeigt.

Ferner sind in Fig. 2 vier Axialkanäle 110 in dem Radialsteg 66 gezeigt.

Bei 111 ist eine Mehrzahl von über den Umfang des Radialabschnittes 80 des zweiten Lamellenträgers 78 verteilt angeordnete Kolbendurchtrittsöffnungen 111 dargestellt, über die der zweite Kolben 94 eine Andruckkraft auf das zweite Lamellenpaket 89 ausüben kann.

Zurückkommend auf Fig. 1 ist dort gezeigt, dass der Radialabschnitt 80 des zweiten Lamellenträgers 78 eine axiale Auswölbung besitzt, die als Gegenlager 112 für das erste Lamellenpaket 87 ausgebildet ist. Mit anderen Worten stützt sich das erste Lamellenpaket 87 an dem Gegenlager 112 ab, wenn mittels des ersten Kolbens 92 eine axiale Andruckkraft auf das erste Lamellenpaket 87 ausgeübt wird.

Ein entsprechendes Gegenlager für das zweite Lamellenpaket 89 ist an dem Eingangsglied 26 ausgebildet.

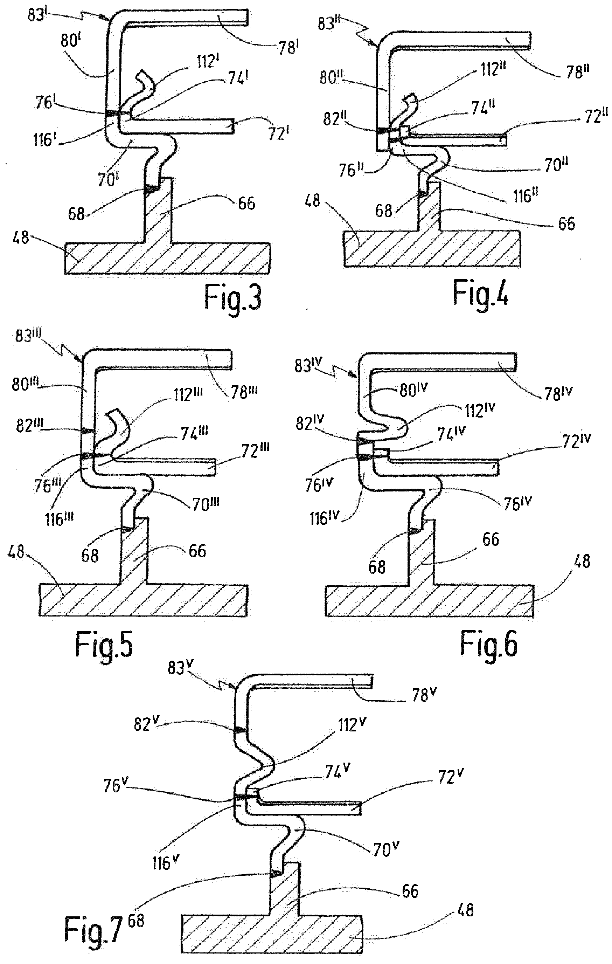

In den Fig. 3 bis 7 sind weitere Ausführungsformen von Lamellenträgerkörben gezeigt, die hinsichtlich Aufbau und Funktionsweise generell dem Lamellenträgerkorb 83 der Fig. 1 entsprechen. Gleiche Elemente sind daher durch gleiche Bezugszeichen gekennzeichnet. Im Folgenden werden im Wesentlichen die Unterschiede erläutert.

Die Lamellenträgerkörbe der Fig. 3 bis 7 sind lediglich schematisch dargestellt.

Der Lamellenträgerkorb 83' der Fig. 3 weist einen zweiten Lamellenträger 78' auf, dessen Radialabschnitt 80' einstückig mit dem Trägerelement 70' ausgebildet ist. Bei dieser Ausführungsform ist folglich der zweite Lamellenträger 78' bzw. das hierdurch gebildete Trägerelement über die erste Schweißverbindung 68 mit dem Radialsteg 66 verbunden.

Ferner weist der erste Lamellenträger 72' an einem über den Radialkranz 74' radial nach außen vorstehenden Abschnitt ein Gegenlager 112' auf.

Der das Trägerelement 70' bildende Abschnitt des zweiten Lamellenträgers 78' weist einen Radialabschnitt 116 auf, der axial benachbart ist zu dem Radialkranz 74'. Der erste Lamellenträger 72' ist mit dem zweiten Lamellenträger 78' über eine zweite Schweißverbindung 76' verbunden, die in axialer Richtung durch diesen Radialabschnitt 116 hindurchgeht und eine stoffschlüssige Verbindung zwischen dem Radialabschnitt 116 und dem Radialkranz 74' realisiert. Bei dieser Ausführungsform kann der Lamellenträgerkorb 83' mit nur zwei Schweißnähten realisiert werden.

Der Lamellenträgerkorb 83" der Fig. 4 weist ein Trägerelement 70" auf, das mit dem Radialsteg 66 über eine erste Schweißverbindung 68 verbunden ist. Ferner weist das Trägerelement 70" einen Radialabschnitt 116" auf, der benachbart ist zu dem Radialkranz 74". Der Radialabschnitt 116" und der Radialkranz 74" sind über eine durch das Trägerelement 70" hindurchgehende zweite Schweißverbindung 76" miteinander verbunden. Ein radial außen liegender Abschnitt des Trägerelementes 70" weist ein Gegenlager 112" auf.

In radialer Richtung zwischen dem Gegenlager 112" und der zweiten Schweißverbindung 76" ist eine dritte Schweißverbindung 82" ausgebildet, die durch den Radialabschnitt 80" des zweiten Lamellenträgers 78" axial hindurchgeht und diesen mit dem Radialabschnitt 116" des Trägerelementes 70" verbindet.

Fig. 5 zeigt einen Lamellenträgerkorb 83"', der generell ähnlich aufgebaut ist wie der Lamellenträger 83' der Fig. 3. In diesem Fall ist jedoch das Trägerelement 70''' als ein separates Bauelement vorgesehen, das über eine dritte Schweißverbindung 82''' mit dem Radialabschnitt 80''' des zweiten Lamellenträgers 78''' verbunden ist.

Fig. 6 zeigt einen Lamellenträgerkorb 831V, der generell der Ausführungsform des Lamellenträgerkorbes 83''' der Fig. 5 entspricht. Bei dem Lamellenträgerkorb 831V ist jedoch ein Gegenlager 1121V an dem Radialabschnitt 801V des zweiten Lamellenträgers 781V ausgebildet, so dass der erste Lamellenträger 721V lediglich einen stummelartigen Radialkranz 741V aufweist, der radial innerhalb des Gegenlagers 112IV angeordnet ist. Eine dritte Schweißverbindung 821V ist radial innerhalb des Gegenlagers 1121V ausgebildet.

Fig. 7 zeigt eine weitere Ausführungsform eines Lamellenträgerkorbes 83V, der im Wesentlichen dem Lamellenträgerkorb 831V der Fig. 6 entspricht. Im Unterschied zu diesem ist die dritte Schweißverbindung 82V bei dem Lamellenträgerkorb 83V radial außerhalb des Gegenlagers 112V ausgebildet.

Die vorliegende und wenigstens eine weitere Erfindung sind in den nachstehenden Klauseln patentanspruchartig definiert.
Klausel 1 Lageranordnung (46) für wenigstens einen Lamellenträger (72, 78) einer Reibkupplungsanordnung (14), insbesondere für einen Kraftfahrzeugantriebsstrang, mit einem Nabenelement (48), das an einem Zapfen (50) drehbar lagerbar ist, das einen radial nach außen vorstehenden Radialsteg (66) aufweist und an dem ein Trägerelement (70) festgelegt ist, das mit dem Lamellenträger (72, 78) verbunden ist,
   dadurch gekennzeichnet, dass
   das Trägerelement (70) an dem Radialsteg (66) über eine um wenigstens 300° umlaufende stoffschlüssige Verbindung (68) festgelegt ist.
Klausel 2 Lageranordnung nach Klausel 1, dadurch gekennzeichnet, dass das Trägerelement (70) mit dem Lamellenträger (72, 78) über eine um wenigstens 300° umlaufende stoffschlüssige Verbindung (76, 82) festgelegt ist.
Klausel 3 Lageranordnung nach Klausel 1 oder 2, dadurch gekennzeichnet, dass der Lamellenträger (72) an einem axialen Ende einen ersten umlaufenden Radialkranz (74) aufweist, über den der Lamellenträger (72) mit dem Trägerelement (70) verbunden ist.
Klausel 4 Lageranordnung nach einer der Klauseln 1 - 3 oder nach dem Oberbegriff der Klausel 1, dadurch gekennzeichnet, dass das Nabenelement (48) wenigstens einen Radialkanal (62) für ein Hydraulikfluid aufweist, der in einen radial außerhalb des Nabenelementes (48) angeordneten Bauraum mündet, wobei der Bauraum in axialer Richtung von dem Radialsteg (66) und /oder von dem Trägerelement (70) in einen ersten Raum (105) und einen zweiten Raum (107) unterteilt ist, und wobei in dem Radialsteg (66) wenigstens ein Axialkanal (110) ausgebildet ist, der den ersten und den zweiten Raum (105, 107) verbindet.
Klausel 5 Lageranordnung nach Klausel 4, dadurch gekennzeichnet, dass der Axialkanal (110) radial beabstandet von der Verbindung (68) zwischen Radialsteg (66) und Trägerelement (70) angeordnet ist.
Klausel 6 Lageranordnung nach einer der Klauseln 1 - 5 oder nach dem Oberbegriff der Klausel 1, dadurch gekennzeichnet, dass der Radialsteg (66) sich in radialer Richtung über eine Rückstellfederanordnung (108) hinaus erstreckt, die zur Rückstellung eines Kolbens (94) ausgebildet ist, der in Bezug auf das Nabenelement (48) axial verschieblich gelagert ist.
Klausel 7 Lageranordnung nach Klausel 6, dadurch gekennzeichnet, dass die Rückstellfederanordnung (108) sich direkt an dem Radialsteg (66) in axialer Richtung abstützt.
Klausel 8 Lageranordnung nach einer der Klauseln 1 - 7 oder nach dem Oberbegriff der Klausel 1, dadurch gekennzeichnet, dass ein Wandelement (100) axial beabstandet zu dem Radialsteg (66) angeordnet ist, wobei zwischen dem Wandelement (100) und dem Radialsteg (66) ein Radialdurchgang (104) für Hydraulikfluid ausgebildet ist, der auf eine radiale Innenseite des Lamellenträgers (72) gerichtet ist.
Klausel 9 Lageranordnung nach Klausel 8, dadurch gekennzeichnet, dass das Wandelement (100) lose zwischen dem Radialsteg (66) und einer weiteren Rückstellfederanordnung (106) angeordnet ist, die zur Rückstellung eines weiteren Kolbens (92) ausgebildet ist, der in Bezug auf das Nabenelement (48) axial verschieblich gelagert ist.
Klausel 10 Lageranordnung nach Klausel 8 oder 9, dadurch gekennzeichnet, dass das Wandelement (100) wenigstens eine axiale Ausbuchtung (102) aufweist, über die sich das Wandelement (100) an dem Radialsteg (66) abstützt.
Klausel 11 Lageranordnung nach einer der Klauseln 8 - 10, dadurch gekennzeichnet, dass das Wandelement (100) mittels des Lamellenträgers (72) zentriert ist.
Klausel 12 Lageranordnung nach einer der Klauseln 8 - 11, dadurch gekennzeichnet, dass ein das Nabenelement (48) durchsetzender Radialkanal (62) eine Mündung aufweist, die auf einen Innenumfang des Wandelementes (100) gerichtet ist.
Klausel 13 Lageranordnung nach einer der Klauseln 1 - 12 oder nach dem Oberbegriff der Klausel 1, dadurch gekennzeichnet, dass der Lamellenträger (72) und ein zweiter Lamellenträger (78) direkt oder indirekt über das Trägerelement (70) miteinander verbunden sind, wobei die Verbindung (76'; 72", 82"; 76''', 82'''; 76IV, 82IV; 76V, 82V) so gewählt ist, dass der erste und der zweite Lamellenträger (72, 78) bei einem Bruch der Verbindung (76'; 72", 82"; 76"', 82'''; 76IV, 82IV; 76V, 82V) voneinander getrennt werden.
Klausel 14 Lageranordnung nach Klausel 13, dadurch gekennzeichnet, dass das Trägerelement (70) einen Radialabschnitt (116) aufweist, der axial benachbart zu einem Radialkranz angeordnet ist, der an einem axialen Ende des ersten Lamellenträgers (72) ausgebildet ist, wobei die Verbindung (76'; 72", 82"; 76"', 82'''; 76IV, 82IV; 76V, 82V) eine axial durch das Trägerelement (70) hindurchgehende stoffschlüssige Verbindung (76'; 72", 82"; 76''', 82'''; 76IV, 82IV; 76V, 82V) aufweist.
Klausel 15 Kupplungsanordnung (14) für einen Kraftfahrzeugantriebsstrang (10) mit einer Lageranordnung (46) nach einer der Klauseln 1 - 14.

## Patentansprüche

1. Lageranordnung (46) für wenigstens einen Lamellenträger (72, 78) einer Reibkupplungsanordnung (14), insbesondere für einen Kraftfahrzeugantriebsstrang, mit einem Nabenelement (48), das an einem Zapfen (50) drehbar lagerbar ist, das einen radial nach außen vorstehenden Radialsteg (66) aufweist und an dem ein Trägerelement (70) festgelegt ist, das mit dem Lamellenträger (72, 78) verbunden ist,
**dadurch gekennzeichnet, dass**
das Nabenelement (48) wenigstens einen Radialkanal (62) für ein Hydraulikfluid aufweist, der in einen radial außerhalb des Nabenelementes (48) angeordneten Bauraum mündet, wobei der Bauraum in axialer Richtung von dem Radialsteg (66) und /oder von dem Trägerelement (70) in einen ersten Raum (105) und einen zweiten Raum (107) unterteilt ist, und wobei in dem Radialsteg (66) wenigstens ein Axialkanal (110) ausgebildet ist, der den ersten und den zweiten Raum (105, 107) verbindet.

2. Lageranordnung nach Anspruch 1, **dadurch gekennzeichnet, dass** der Axialkanal (110) radial beabstandet von der Verbindung (68) zwischen Radialsteg (66) und Trägerelement (70) angeordnet ist.

3. Lageranordnung nach einem der Ansprüche 1 - 2, **dadurch gekennzeichnet, dass** der Radialsteg (66) sich in radialer Richtung über eine Rückstellfederanordnung (108) hinaus erstreckt, die zur Rückstellung eines Kolbens (94) ausgebildet ist, der in Bezug auf das Nabenelement (48) axial verschieblich gelagert ist.

4. Lageranordnung nach Anspruch 3, **dadurch gekennzeichnet, dass** die Rückstellfederanordnung (108) sich direkt an dem Radialsteg (66) in axialer Richtung abstützt.

5. Lageranordnung nach einem der Ansprüche 1 - 4, **dadurch gekennzeichnet, dass** ein Wandelement (100) axial beabstandet zu dem Radialsteg (66) angeordnet ist, wobei zwischen dem Wandelement (100) und dem Radialsteg (66) ein Radialdurchgang (104) für Hydraulikfluid ausgebildet ist, der auf eine radiale Innenseite des Lamellenträgers (72) gerichtet ist.

6. Lageranordnung nach Anspruch 5, **dadurch gekennzeichnet, dass** das Wandelement (100) lose zwischen dem Radialsteg (66) und einer weiteren Rückstellfederanordnung (106) angeordnet ist, die zur Rückstellung eines weiteren Kolbens (92) ausgebildet ist, der in Bezug auf das Nabenelement (48) axial verschieblich gelagert ist.

7. Lageranordnung nach Anspruch 5 oder 6, **dadurch gekennzeichnet, dass** das Wandelement (100) wenigstens eine axiale Ausbuchtung (102) aufweist, über die sich das Wandelement (100) an dem Radialsteg (66) abstützt.

8. Lageranordnung nach einem der Ansprüche 5 - 7, **dadurch gekennzeichnet, dass** das Wandelement (100) mittels des Lamellenträgers (72) zentriert ist.

9. Lageranordnung nach einem der Ansprüche 5 - 8, **dadurch gekennzeichnet, dass** ein das Nabenelement (48) durchsetzender Radialkanal (62) eine Mündung aufweist, die auf einen Innenumfang des Wandelementes (100) gerichtet ist.

10. Lageranordnung nach einem der Ansprüche 1 - 9, **dadurch gekennzeichnet, dass** der Lamellenträger (72) und ein zweiter Lamellenträger (78) direkt oder indirekt über das Trägerelement (70) miteinander verbunden sind, wobei die Verbindung (76'; 72", 82"; 76"', 82'''; 761V, 82IV; 76V, 82V) so gewählt ist, dass der erste und der zweite Lamellenträger (72, 78) bei einem Bruch der Verbindung (76'; 72", 82"; 76''', 82'''; 761V, 82IV; 76V, 82V) voneinander getrennt werden.

11. Lageranordnung nach Anspruch 10, **dadurch gekennzeichnet, dass** das Trägerelement (70) einen Radialabschnitt (116) aufweist, der axial benachbart zu einem Radialkranz angeordnet ist, der an einem axialen Ende des ersten Lamellenträgers (72) ausgebildet ist, wobei die Verbindung (76'; 72", 82"; 76''', 82'''; 761V, 82IV; 76V, 82V) eine axial durch das Trägerelement (70) hindurchgehende stoffschlüssige Verbindung (76'; 72", 82"; 76''', 82'''; 76IV, 82IV; 76V, 82V) aufweist.

12. Lageranordnung nach einem der Ansprüche 1 - 11, **dadurch gekennzeichnet, dass** das Trägerelement (70) an dem Radialsteg (66) über eine um wenigstens 300° umlaufende stoffschlüssige Verbindung (68) festgelegt ist.

13. Lageranordnung nach Anspruch 12, **dadurch gekennzeichnet, dass** das Trägerelement (70) mit dem Lamellenträger (72, 78) über eine um wenigstens 300° umlaufende stoffschlüssige Verbindung (76, 82) festgelegt ist.

14. Lageranordnung nach Anspruch 12 oder 13, **dadurch gekennzeichnet, dass** der Lamellenträger (72) an einem axialen Ende einen ersten umlaufenden Radialkranz (74) aufweist, über den der Lamellenträger (72) mit dem Trägerelement (70) verbunden ist.

15. Kupplungsanordnung (14) für einen Kraftfahrzeugantriebsstrang (10) mit einer Lageranordnung (46) nach einem der Ansprüche 1 - 14.
